# EUROPEAN PATENT APPLICATION

(11) **EP 1 843 128 A2**
(43) Date of publication of application: **10.10.2007**
(21) Application number: 07090065.9
(22) Date of filing: 02.04.2007
(51) Int. Cl.: G01C 15/00

(54) **Cross line laser**

(30) Priority: 03.04.2006 JP 2006101702
(71) Applicant: Myzox Co., Ltd., Nagakute-cho Aichi-gun, Aichi-ken (JP)
(72) Inventor: Migita, Michinori, Aichi-gun Aichi-ken (JP)
(74) Representative: Müller, Wolfram Hubertus

(57) **Abstract**

A cross line laser (1) includes a main body housing (5) having a plurality of windows (7,8) for irradiating a laser light in vertical and horizontal directions therethrough;, a swingable member (2) positioned within the main body housing (5) and being able to swing via a gimbal mechanism (22), a laser light source units (3) connected to the swingable member (2), a regulating member (16) comprising an impact absorbing material positioned within the main body housing (5) opposite to a lower free end of the swingable member (2), wherein the lower free end of the swingable member (2) is movable into the regulating member (16) a regulating opening (17) formed in the regulating member (16) and defining a contact surface to which the lower free end of the swingable member (2) can contact when the swingable member (2) moves; and a plurality of cut-in grooves (18) are formed in the contact surface of the regulating opening (17) and are spaced from each other.

## Description

This application claims priority to Japanese patent application serial number 2006-101702, the contents of which are incorporated herein by reference.

The present invention relates to a cross line laser, which draws perpendicular lines or horizontal lines by irradiating a laser beam to a target to be irradiated such as a wall, a ceiling and a floor etc. at a building site etc. More particularly, the invention relates to a cross line laser which can protect members, for instance, a laser source unit etc. installed to a swingably disposed swingable member, which is installed within an outer covering member of the cross line laser, from various impacts.

Generally, this kind of cross line laser includes an swingable member swingably installed in a suspended manner via a gimbal mechanism within the main body housing, to which a laser light generation means for irradiating a laser beam in a predetermined direction, and a laser source unit having an optical means for irradiating the laser beam generated by the laser light generation means in the predetermined direction are installed. In order to protect the laser source unit installed to the swingable member from various kinds of impacts, a conventional cross line laser is constructed such that a fixing plate for installing the gimbal mechanism and a supporting plate for supporting the fixing plate are fixed to each other via an impact absorbing material, and the impact absorbing material is placed at an area where a lower free end of the swingable member. An example of this type of configuration is disclosed in Japanese Laid Open Patent Publication No. 2005-292059.

However, among the various impact absorbing materials of the conventional cross line laser, the impact absorbing materials (utilized for fixing the fixing plate and the supporting plate) have a bush construction that is fitted with a bolt used for connecting these plates. The impact absorbing materials for absorbing impacts generated by the contact of the lower free end of the swingable member has a construction simply utilizing an O-ring. Although these impact absorbing materials can serve to absorb impacts, the level of absorption of an impact is not suitable for various configuration. Therefore it is an object of the present invention to provide a cross line laser that can effectively protect laser source units etc. installed to a swingably disposed swingable member from various kinds of vibrations and impacts.

One aspect according to the present invention includes a cross line laser having a main body housing having a plurality of windows for irradiating a laser light in vertical and horizontal directions therethrough; a swingable member positioned within the main body housing and being able to swing via a gimbal mechanism; anda plurality of laser light source units connected to the swingable member and each including a laser light generating means and an optical means; characterized in that a regulating member including an impact absorbing material is disposed within the main body housing in a position opposite a lower free end of the swingable member; the lower free end of the swingable member positionable within the regulating member; a regulating opening is formed in the regulating member and defines a contact surface to which the lower free end of the swingable member is able to contact when the swingable member moves; and a plurality of cut-in grooves are formed in the contact surface and are spaced from each other at predetermined intervals.

According to this construction, when the swingable member swings more than necessary, the lateral surface of the lower free end of the swingable member can contact the contact surface of the regulating opening of the regulating member made of impact absorbing material, and the vibrations and impacts generated by the contact can be effectively damped and absorbed due to the contacting surface having a plurality of cut-in grooves. As a result, each laser source unit installed to the swingable member is effectively protected from the vibrations and the impacts.

In one embodiment, the regulating member includes a plate-like member. The plate-like member has an increased thickness portion provided between the regulating opening and an outer periphery of the plate-like member. A space is formed through the increased thickness portion.

According to this construction, when the swingable member swings more than necessary, the lateral surface of the lower free end of the swingable member can contact the contact surface of the regulating opening of the regulating member made of the impact absorbing material, and the vibrations and impacts generated by the contact can be more effectively (efficiently) damped and absorbed by the space formed in the regulating member. As a result, each laser source unit installed to the swingable member is effectively protected from the vibrations and the impacts.

In another embodiment, the regulating member includes a plate-like member having a substantially circular or rectangular configuration. The regulating opening has a circular configuration and is formed in a central portion of the regulating member. The plate-like member has an increased thickness portion provided between the regulating opening and an outer periphery of the plate-like member. A substantially elliptical or triangular space is formed through the increased thickness portion.

According to this construction, when the swingable member swings more than necessary, the lateral surface of the lower free end of the swingable member can contact the contact surface of the regulating opening of the regulating member made of the impact absorbing material, and the vibrations and impacts generated by the contact can be more effectively (efficiently) damped and absorbed by the space formed in the regulating member. As a result, each laser source unit installed to the swingable member is effectively protected from the vibrations and the impacts.

Another aspect of the present invention includes a cross line laser having a main body housing having a plurality of)open windows for irradiating a laser light in vertical and horizontal directions therethrough; a swingable member disposed in a suspended manner within the main body housing and being able to swing via a gimbal mechanism; and a plurality of laser light source units connected to the swingable member and including a laser light generating means and an optical means; characterized in that a supporting member supporting the gimbal mechanism is connected to an attaching member in a lapped manner, the attaching member being installed inside of the main body housing, the attaching member and the supporting member are connected to each other by a rivet-like jointing member, a space is provided between the contacting surfaces of the attaching member and the supporting member, and the rivet-like jointing member is made of a vibration damping material.

According to this construction, the rivet-like jointing member made of vibrations damping material at a connecting region between the attaching member and the supporting member can damp and absorb the vibrations and the impacts transmitted from the main body housing to the swingable member, and the assembling construction at the connecting region can be simplified. As a result, each laser source unit installed to the swingable member is effectively protected from the vibrations and the impacts.

In one embodiment, the jointing member includes a shaft-like member. The shaft-like member has head portions and a flange portion that are formed integrally with a shaft of the shaft-like member. The head portions have a larger diameter than the shaft diameter and are disposed on opposite ends of the shaft. The flange portion has a larger diameter than the shaft and is disposed on a substantially middle portion of the shaft.

According to this construction, it is possible to damp and absorb the vibrations and the impacts transmitted from the main body housing to the swingable member, and to simplify the assembling construction at the connecting region. As a result, each laser source unit installed to the swingable member is effectively protected from the vibrations and the impacts.

Another aspect of the present invention includes a cross line laser having a main body housing having an open windows for irradiating a laser light in vertical and horizontal directions therethrough; a swingable member disposed in a suspended manner within the main body housing and being able to swing via a gimbals mechanism; and a laser light source units installed at a predetermined position of the swingable member and each including a laser light generating means and an optical means; characterized in that the open windows for irradiating the laser beam is formed in at least one outer upright surface of the main body housing; a portion of an outer upright surface of the main body housing is formed as a display surface for displaying a laser beam irradiation state; and an outer covering member made of an impact damping material is positioned so that it surrounds other outer periphery surfaces and a portion of a bottom surface of the main body housing except for the at least one outer periphery surface and the display surface.

According to this construction, when impacts are applied from outside to the main body housing, in other words, to the entire cross line laser, the impacts can be damped and absorbed by surrounding the aforementioned main body housing with an outer covering member made of the impact absorbing material. As a result, each laser source unit installed to the swingable member is effectively protected from the vibrations and the impacts.

In one embodiment, the outer covering member has a plurality of linear spaces with a predetermined depth and width formed in an inner surface of the covering member contacting the main body housing.

According to this construction, when impacts are applied from outside to the main body housing, in other words, to the entire cross line laser, the impacts can be damped and absorbed more effectively (efficiently) by linear spaces of the outer covering member that surrounds the main body housing in a holding manner. As a result, each laser source unit installed to the swingable member is effectively protected from the vibrations and the impacts.

In another embodiment, the outer covering member has a plurality of substantially hemispherical projections formed at desired intervals on the at least one outer upright surface.

According to this construction, it is also possible to further effectively (efficiently) damp and absorb the vibrations and impacts and at the same time to improve the holding state of the cross line laser. As a result, each laser source unit installed to the swingable member is effectively protected from the vibrations and the impacts.

Another aspect of the present invention includes a cross line laser having a main body housing having an open windows for irradiating a laser light in vertical and horizontal directions therethrough; a swingable member disposed in a suspended manner within the main body housing and being able to swing via a gimbal mechanism; and a laser light source units installed at a predetermined position of the swingable member and each including a laser light generating means and an optical means; characterized in that a supporting member supporting the gimbal mechanism is assembled with an attaching member in a lapped manner, the attaching member being installed inside of the main body housing; the attaching member and the supporting member are connected to each other by a rivet-like jointing member made of vibration damping material in such a manner that a predetermined space is provided between the contacting surfaces of the attaching member and the supporting member; a regulating member comprising an impact absorbing material is disposed within the main body housing in a position opposing to a lower free end of the swingable member; the lower free end of the swingable member is positionable into the regulating member; a regulating opening is formed in the regulating member and defines a contact surface to which the lower free end of the swingable member can contact when the swingable member moves; and a plurality of cut-in grooves are formed in the contact surface in an axial direction of the regulating opening and are spaced from each other at predetermined intervals.

According to this construction, it is possible to further effectively (efficiently) damp and absorb the vibrations and the impacts produced when the vibrations and impacts are transmitted from the main body housing to the swingable member, furthermore, when the swingable member swings more than necessary. As a result, each laser source unit installed to the swingable member is effectively protected from the vibrations and the impacts.

Another aspect of the present invention includes a cross line laser having a main body housing having an open windows for irradiating a laser light in vertical and horizontal directions therethrough; a swingable member disposed in a suspended manner within the main body housing and being able to swing via a gimbal mechanism; and a laser light source units installed at a predetermined position of the swingable member and each including a laser light generating means and an optical means; characterized in that: a supporting member supporting the gimbal mechanism is assembled with an attaching member, the attaching member positioned inside the main body housing; the attaching member and the supporting member are connected to each other by a rivet-like jointing member made of vibration damping material such that a space is provided between the contacting surfaces of the attaching member and the supporting member; a regulating member comprising an impact absorbing material is positioned within the main body housing opposite a lower free end of the swingable member; the lower free end of the swingable member insertable into the regulating member; a regulating opening is formed in the regulating member and defines a contact surface to which the lower free end of the swingable member can contact when the swingable member moves; a plurality of cut-in grooves are formed in the contact surface in an axial direction of the regulating opening and are spaced from each other at predetermined intervals; the open windows for irradiating the laser beam are formed in at least one outer upright surface of the main body housing; a portion of an outer upright surface of the main body housing is formed as a display surface for displaying a laser beam irradiation state; and an outer covering member made of an impact damping material is positioned so that it surrounds other outer periphery surfaces and a portion of a bottom surface of the main body housing except for the at least one outer periphery surface and the display surface.

According to this construction, it is possible to further effectively (efficiently) damp and absorb the vibrations and the impacts produced when the vibrations and impacts are transmitted from the main body housing to the swingable member, when the swingable member swings more than necessary, and when impacts is applied to the main body housing, in other words, the entire cross line laser. As a result, each laser source unit installed to the swingable member is effectively protected from the vibrations and the impacts.

Additional objects, features, and advantages, of the present invention will be readily understood after reading the following detailed description together with the claims and the accompanying drawings, in which:
FIG.1 is a perspective view showing the entire configuration of an embodiment of this invention.
FIG. 2 is a perspective view showing an outer covering member.
FIG. 3 is a side view showing the outer covering member.
FIG. 4 is a cross-sectional view along of A-A line in Fig. 3.
FIG. 5 is a perspective view showing the primary portion installed inside the main body housing.
FIG. 6 is a plan view showing a regulating member.
FIG. 7 is a side cross-sectional view showing the connection between the attaching member and the supporting member.
FIG. 8 is a front cross-sectional view with the main body housing and the outer covering member removed
FIG. 9 is a side cross-sectional view with the main body housing and the outer covering member removed.
FIG. 10 is a front cross-sectional view showing the connection between the attaching member and the supporting member.

Each of the additional features and teachings disclosed above and below may be utilized separately or in conjunction with other features and teachings to provide improved cross line lasers. Representative examples of the present invention, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful embodiments of the present teachings.

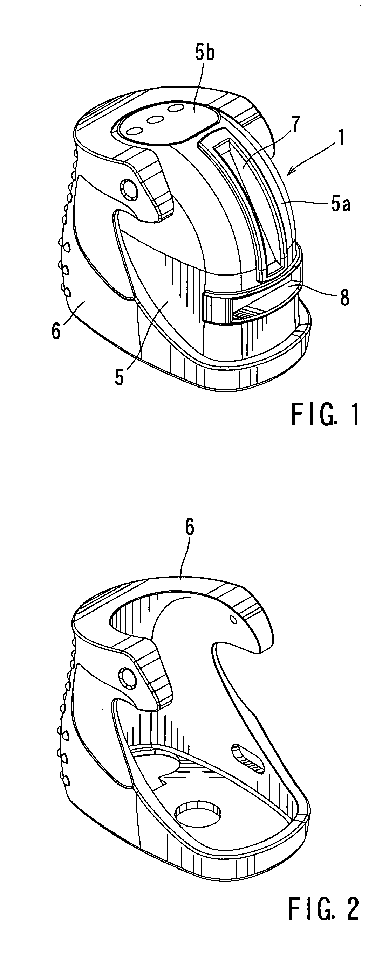

An embodiment according to the present invention will now be described with reference to FIGS. 1 to 10.

As shown in FIG. 1, a cross line laser 1 according to this embodiment is constituted primarily by an swingable member 2, an apparatus main body 4 including a plural number of the laser light source units 3, which are installed to the swingable member 2, a main body housing 5 in which the apparatus main body 4 is installed, and an outer covering member 6, which is attached in such a manner that it covers the outer periphery and the lower portion of the main body housing 5.

The main body housing 5 is formed to have a tubular configuration with a substantially elliptical cross-section, an outer upright surface 5a, which is a part of the outer periphery of the main body housing 5 and defines a curved surface that becomes gradually narrower from a position at a substantially central lower portion towards the upper surface. A first open window 7 for irradiating a laser beam, which will be described later, as a vertical linear beam, and a second open window 8 positioned on the lower side of the first open window 7 for irradiating the laser beam, which will be described later, as a horizontal linear beam, are formed through the curved outer upright surface 5a. Also, the upper surface of the main body housing 5 defines a display surface 5b for exhibiting various display lamps and instruction marks on the surface for displaying irradiation conditions and the like of the laser beam which will be described later. In addition, in the embodiment shown in the drawings, one outer upright surface 5a is formed and the first open window 7 and the second open window 8 are formed therethrough, however, plural number of outer upright surfaces can be formed.

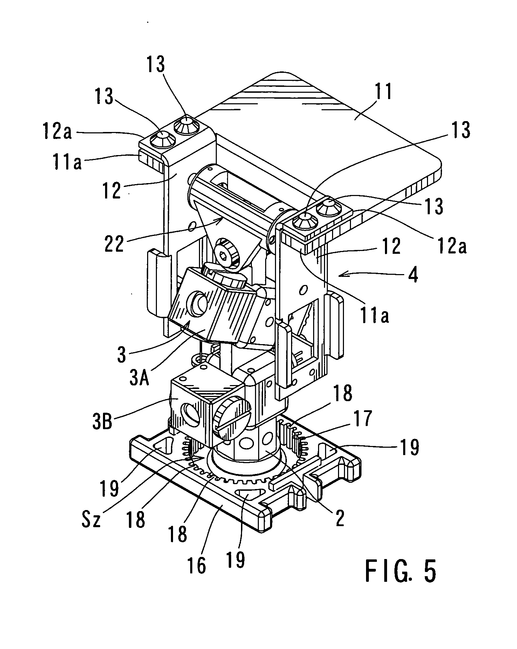

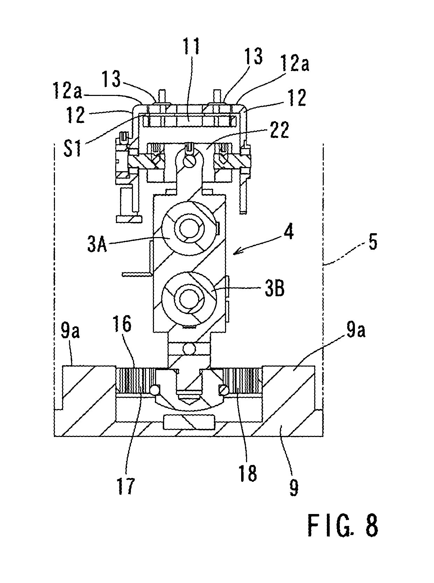

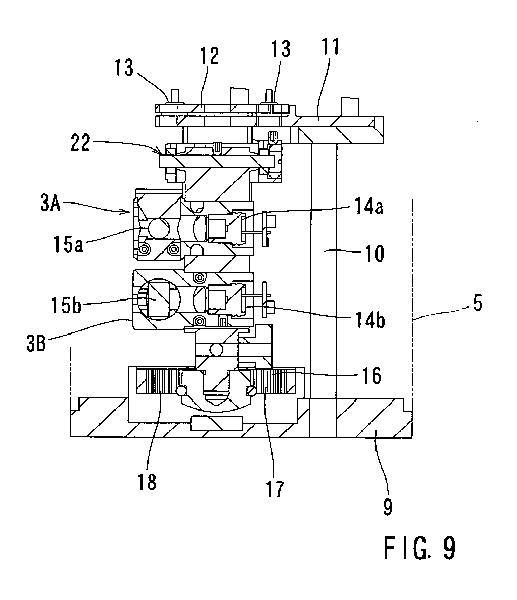

As shown in FIG. 8 and FIG 9, at the lower portion of the apparatus main body 4 having the swingable member 2 and plural number of the laser light source units 3, etc., installed to the swingable member 2, a plate-like pedestal member 9 is positioned and a supporting column member 10 is integrally installed in an upright manner on a portion of the outer periphery of the pedestal member 9. At the top end of the supporting column member 10, an attaching member 11 horizontally extends therefrom, a pair of left and right inverted-L shaped supporting members 12 are connected in a suspended manner on both lateral edges of one end of the attaching member 11 and the swingable member 2 is installed in a suspended manner, and thus able to swing via a gimbal mechanism 22 assembled between the pair of supporting members 12. In addition, although FIG. 5 shows the state where the pair of supporting members 12 is connected in a suspended manner to projecting pieces 11a from the inside thereof, which are formed on both lateral edges of one end of the attaching member 11, the attaching construction of the supporting members 12 to the attaching member 11 can be achieved by any other constructions.

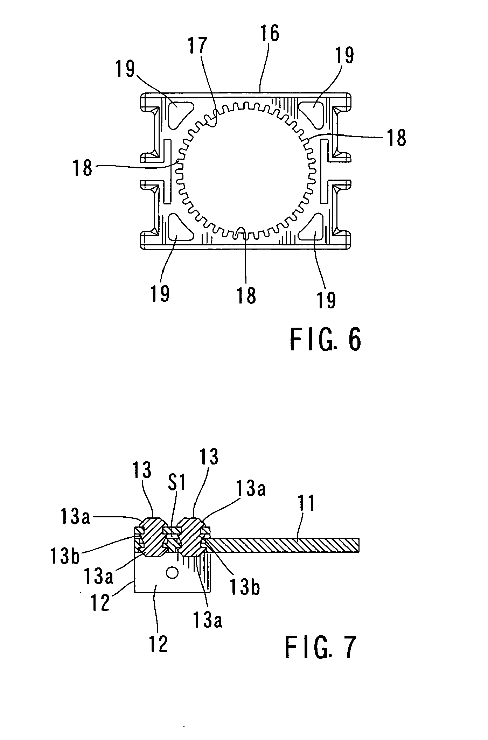

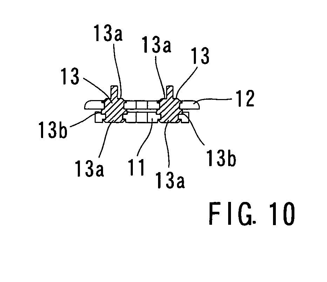

As shown in FIG. 7 and FIG. 10, as the attaching (joining) construction of the supporting members 12 to the attaching member 11, upper curved pieces 12a of the supporting members 12 are positioned on the upper surface of the attaching member 11, and both members are coupled to each other via rivet-like jointing members 13 made of vibrations damping material respectively at two sites. In addition, the jointing members 13 are preferably molded with materials such as natural rubber, silicon rubber, and polyurethane etc., which have good performance in absorbing vibrations and impacts energy, as the vibrations damping material.

More specifically, each jointing members 13 can be formed in a shaft like configuration and each integrally formed with a head portion 13a with a larger diameter than the shaft diameter and formed on opposite ends of the shaft. Each can include a flange portion 13b with a larger diameter than the shaft diameter and formed on a substantially middle portion of the shaft. Further, the shaft can be fitted in a press fitting condition into holes of the attaching member 11 and each supporting member 12, and the connection be made, while both head portions 13a are respectively positioned on the side of the upper surface of the attaching member 11 and on the side of the lower surface of the supporting member 12. Also, the flange part 13b can be placed such that a predetermined gap S1 is provided between the contacting surfaces of the attaching member 11 and the supporting member 12.

Accordingly, between the attaching member 11 and the supporting member 12, each jointing member 13 (for example, in a rivet-like configuration) can absorb and/or damp vibrations and impacts transmitted from the attaching member 11 to the supporting member 12.

At a predetermined position on the periphery of the swingable member 2 is connected to a first the laser light source units 3A having a laser light generating means 14a and an optical means 15a (which can be a cylindrical lens irradiating the laser light generated by the laser light generating means 14a in a predetermined vertical direction). Further, swingable member 2 can connected to a second the laser light source units 3B having a laser light generating means 14b and an optical means 15b which is a cylindrical lens irradiating the lager light generated by the laser generating means 14b in a predetermined horizontal direction. Both laser light source 3A and 3B can be installed with a phase difference with respect to upward and downward directions such that these units correspond to the first opening window 7 and the second opening window 8. Those skilled in the art will appreciate that additional windows and laser light sources can be included without departing from the scope of the invention. In addition, although not shown in the drawings, swingable member 2 is able to accommodate a construction that enables irradiation of the laser light in an up and down direction.

As shown in FIG. 8 and FIG. 9, a recessed portion with a pre-determined depth is formed, in the upper surface of the pedestal member 9 and define a pair of convex portions 9a on opposite sides of the recessed portion and a regulating member 16 is fitted between the convex portions 9a. Also, as shown in FIG. 5 and FIG. 6, the regulating member 16 can be formed of an impact absorbing material and shaped in a rectangular plate-like body with a desired thickness. The regulating member 16 can also include a circular shaped regulating opening 17 formed in the center portion of the regulating member 16 and extending therethrough, and a number of cut-in grooves 18 formed in the axial direction of the regulating opening 17 at predetermined intervals therebetween (the intervals are uniform in the drawings) in the contacting surface of the inner periphery of the regulating opening 17. Further, substantially triangularly shaped openings 19 can be formed through increased thickness portions formed at corners of the regulating member 16 between the regulating opening 17 and the outer peripheral edge. In addition, the regulating member 16 is preferably molded with materials such as natural rubber, silicon rubber, and polyurethane etc., which have good performance in absorbing oscillation and impact energy.

Accordingly, the lower free end of the swingable member 2 is positioned within the regulating opening 17 of the regulating member 16 so as to extend within space SZ, and when the swingable member 2 swings more than necessary, the lateral surface of the lower free end of the swingable member 2 can contact the regulating member 16. Therefore, when the swingable member 2 swings more than necessary, the lateral surface of its lower free end contacts the circumference of the regulating opening 17 of the regulating member 16, the vibrations and impacts generated by the contact is damped and/or absorbed by the contacting surface where a number cut-in grooves 18 are formed. Furthermore, although the regulating member 16 is formed to have a substantially rectangular configuration in the embodiment shown in the attached drawings, it can be formed in a circular configuration. In such as case, the openings 19 can be formed in a substantially elliptical configuration on the desired positions of the increased thickness portions between the regulating opening 17 and the outer peripheral edge.

The lower open portion of the main body hosing 5 can be fitted with a stopped portion at the outer periphery of the pedestal member 9 such that the main body housing 5 covers the apparatus main part 4 from the outer side.

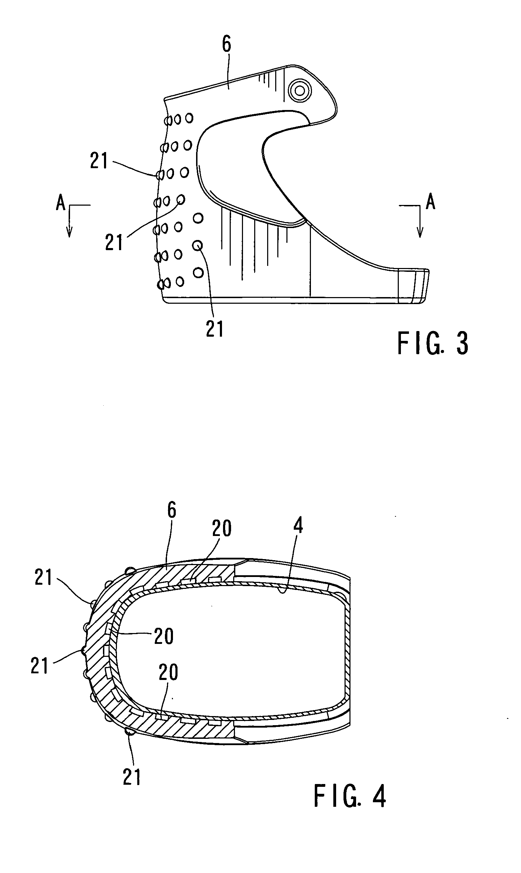

As shown in FIG. 2 and FIG.3, the outer covering member 6 is molded with an impact absorbing material having a pre-determined thickness and is configured to conform to a three dimensional shape of the outer upright surface 5a and the display surface 5b of the upper surface of the main body housing 5. Thus, the outer covering member 6 is installed in such a manner that it surrounds (covers) the outer peripheral surface and the bottom surface of the main body housing 5 except for the outer upright surface 5a and the upper display surface 5b. In addition, the outer covering member 6 is desirably molded with material such as natural rubber, silicon rubber, and polyurethane etc., which has a good performance in absorbing vibrations and impacts energy. Further, when the main body housing 5 has the first opening window and the second opening window in each of plural number of outer upright surfaces or when the laser light source units for irradiating the laser light in upper and lower directions is provided, the outer covering member 6 is installed in such a manner that it surrounds (covers) the outer upright surfaces and the display surfaces 5b of the upper surface of the main body housing 5, and further, the other portions of the outer surface and the bottom surface except for a portion for irradiating the laser light in down and up directions.

As shown in FIG. 4, on the inner surface of the outer covering member 6 in contact with the main body hosing 5, a number of linear spaces 20 with a pre-determined depth and a width can be formed in up-down directions, lateral (left and right) directions or in a rectangular pattern. Further, a number of substantially hemispherical projections 21 can be formed at desired intervals to extend from the outer upright surface of the outer covering member 6. Note that the liner spaces 20 are omitted in Fig. 2. Accordingly, when an impact has been applied from outside to the main body housing 5, in other words, the entire cross line laser 1, the outer covering member 6 can damp and/or absorb the impact.

Because the present embodiment is constructed as explained above, when the swingable member 2 swings more than necessary, the lateral surface of the lower free end of the swingable member 2 contacts the periphery of the regulating opening 17 of the regulating member 16 made of the impact absorbing material, such that the contacting surface with a number of cut out grooves 18 formed in the periphery of the regulating opening 17 damps and/or absorbs the vibration and the impact from the contact.

In this circumstance, via the opening 19 of the regulating member 16, the regulating member 16 itself can damp and absorb the vibrations and the impacts, and it is possible to further effectively (efficiently) damp and/or absorb the vibrations and impacts.

Further, the rivet-like jointing member 13 made of vibrations damping material at a connecting region between the attaching member 11 and the supporting member 12 can damp and absorb the vibrations and the impacts transmitted from the main body housing 5 to the swingable member 2, and at the connecting region, no other jointing means such as bolts etc. are required, thereby simplifying the assembling construction.

Moreover, when impact from outside has been applied to the main body housing 5, in other words, the entire laser cross line laser 1, the outer covering member 6 covering the main body housing 5 in a holding manner, and the linear spaces 20 formed on the inner surface of the covering member 6 damp and/or absorb the impact in more effective (efficient) manner.

In addition, this invention is not limited to the embodiment identified above, and is contemplated that various modifications may be made to the invention without departing from the spirit and scope of the invention as defined.

## Claims

1. A cross line laser (1) comprising:
a main body housing (5) having a plurality of windows (7, 8) for irradiating a laser light in vertical and horizontal directions therethrough;
a swingable member (2) positioned within the main body housing (5) and being able to swing via a gimbal mechanism (22); and
a plurality of laser light source unitss (3) connected to the swingable member (2) and each including a laser light generating means (14) and an optical means (15) ; **characterized in that**:
a regulating member (16) including an impact absorbing material is disposed within the main body housing (5) in a position opposite a lower free end of the swingable member (2);
the lower free end of the swingable member (2) positionable within the regulating member (16);
a regulating opening (17) is formed in the regulating member (16) and defines a contact surface to which the lower free end of the swingable member (2) is able to contact when the swingable member (2)moves; and
a plurality of cut-in grooves (18) are formed in the contact surface and are spaced from each other at predetermined intervals.

2. The cross line laser (1) as defined in claim 1, **characterized in that**:
the regulating member (16) comprises a plate-like member;
the plate-like member has an increased thickness portion provided between the regulating opening (17) and an outer periphery of the plate-like member; and
a space (19) is formed through the increased thickness portion.

3. The cross line laser (1) as defined in claim 1, **characterized in that**:
the regulating member (16) comprises a plate-like member having a substantially circular or rectangular configuration;
the regulating opening (17) has a circular configuration and is formed in a central portion of the regulating member (16); and
the plate-like member has an increased thickness portion provided between the regulating opening (17) and an outer periphery of the plate-like member; and
a substantially elliptical or triangular space (19) is formed through the increased thickness portion.

4. A cross line laser (1) comprising:
a main body housing (5) having a plurality of)open windows (7, 8) for irradiating a laser light in vertical and horizontal directions therethrough;
a swingable member (2) disposed in a suspended manner within the main body housing (5) and being able to swing via a gimbal mechanism (22); and
a plurality of laser light source unitss (3) connected to the swingable member (2) and including a laser light generating means (14) and an optical means (15) ; **characterized in that**:
a supporting member (10) supporting the gimbal mechanism (22) is connected to an attaching member (11) in a lapped manner, the attaching member (11) being installed inside of the main body housing (5),
the attaching member (11) and the supporting member (10) are connected to each other by a rivet-like jointing member (13), wherein a space is provided between the contacting surfaces of the attaching member (11) and the supporting member (10), further wherein the rivet-like jointing member (13) is made of a vibration damping material.

5. The cross line laser (1) as defined in claim 4, **characterized in that**:
the jointing member (13) comprises a shaft-like member;
the shaft-like member has head portions (13a) and a flange portion (13b) that are formed integrally with a shaft of the shaft-like member, the head portions (13a) with a larger diameter than the shaft diameter and disposed on opposite ends of the shaft, and the flange portion (13b) having a larger diameter than the shaft and disposed on a substantially middle portion of the shaft.

6. A cross line laser (1) comprising:
a main body housing (5) having an open windows (7, 8) for irradiating a laser light in vertical and horizontal directions therethrough;
a swingable member (2) disposed in a suspended manner within the main body housing (5) and being able to swing via a gimbals mechanism; and
a laser light source units (3) installed at a predetermined position of the swingable member (2) and each including a laser light generating means (14) and an optical means (15) ; **characterized in that**:
the open windows (7, 8) for irradiating the laser beam is formed in at least one outer upright surface of the main body housing (5);
a portion of an outer upright surface (5a) of the main body housing (5) is formed as a display surface (5b) for displaying a laser beam irradiation state; and
an outer covering member (6) made of an impact damping material is positioned so that it surrounds other outer periphery surfaces and a portion of a bottom surface of the main body housing (5) except for the at least one outer periphery surface and the display surface (5b).

7. The cross line laser (1) as defined in claim 6, **characterized in that**:
the outer covering member (6) has a plurality of linear spaces (20) with a predetermined depth and width formed in an inner surface of the covering member (6) contacting the main body housing (5).

8. The cross line laser (1) as defined in claim 6, **characterized in that**:
the outer covering member (6) has a plurality of substantially hemispherical projections (21) formed at desired intervals on the at least one outer upright surface.

9. A cross line laser (1) comprising:
a main body housing (5) having an open windows (7, 8) for irradiating a laser light in vertical and horizontal directions therethrough;
a swingable member (2) disposed in a suspended manner within the main body housing (5) and being able to swing via a gimbal mechanism (22); and
a laser light source units (3) installed at a predetermined position of the swingable member (2) and each including a laser light generating means (14) and an optical means (15) ; **characterized in that**:
a supporting member (10) supporting the gimbal mechanism (22) is assembled with an attaching member (11) in a lapped manner, the attaching member (11) being installed inside of the main body housing (5);
the attaching member (11) and the supporting member (10) are connected to each other by a rivet-like jointing member (13) made of vibration damping material in such a manner that a predetermined space is provided between the contacting surfaces of the attaching member (11) and the supporting member (10);
a regulating member (16) comprising an impact absorbing material is disposed within the main body housing (5) in a position opposing to a lower free end of the swingable member (2);
the lower free end of the swingable member (2) is positionable into the regulating member (16);
a regulating opening (17) is formed in the regulating member (16) and defines a contact surface to which the lower free end of the swingable member (2) can contact when the swingable member (2)moves; and
a plurality of cut-in grooves (18) are formed in the contact surface in an axial direction of the regulating opening (17) and are spaced from each other at predetermined intervals.

10. A cross line laser (1) comprising:
a main body housing (5) having an open windows (7, 8) for irradiating a laser light in vertical and horizontal directions therethrough;
an swingable member (2) disposed in a suspended manner within the main body housing (5) and being able to swing via a gimbal mechanism (22); and
a laser light source units (3) installed at a predetermined position of the swingable member (2) and each including a laser light generating means (14) and an optical means (15) ; **characterized in that**:
a supporting member (10) supporting the gimbal mechanism (22) is assembled with an attaching member (11), the attaching member (11) positioned inside the main body housing (5);
the attaching member (11) and the supporting member (10) are connected to each other by a rivet-like jointing member (13) made of vibration damping material such that a space is provided between the contacting surfaces of the attaching member (11) and the supporting member (10);
a regulating member (16) comprising an impact absorbing material is positioned within the main body housing (5) opposite a lower free end of the swingable member (2);
the lower free end of the swingable member (2) insertable into the regulating member (16);
a regulating opening (17) is formed in the regulating member (16) and defines a contact surface to which the lower free end of the swingable member (2) can contact when the swingable member (2)moves;
a plurality of cut-in grooves (18) are formed in the contact surface in an axial direction of the regulating opening (17) and are spaced from each other at predetermined intervals;
the open windows (7, 8) for irradiating the laser beam are formed in at least one outer upright surface of the main body housing (5);
a portion of an outer upright surface (5a) of the main body housing (5) is formed as a display surface (5b) for displaying a laser beam irradiation state; and
an outer covering member (6) made of an impact damping material is positioned so that it surrounds other outer periphery surfaces and a portion of a bottom surface of the main body housing (5) except for the at least one outer periphery surface and the display surface (5b).
